# EUROPEAN PATENT SPECIFICATION

(11) **EP 0 307 075 B1**
(45) Date of publication and mention of the grant of the patent: **04.10.1995**
(21) Application number: 88306251.5
(22) Date of filing: 08.07.1988
(51) Int. Cl.: G06F 11/00

(54) **Method and apparatus for measuring program execution**
Verfahren und Gerät zur Programmablaufmessung
Méthode et appareil pour mesurer le déroulement d'exécution d'un programme

(30) Priority: 10.07.1987 US 72811
(43) Date of publication of application: 15.03.1989
(73) Proprietor: TANDEM COMPUTERS INCORPORATED, Cupertino California 95014-2599 (US)
(72) Inventor: Bailey, Bruce William, Cupertino California 95014 (US)
(74) Representative: Ayers, Martyn Lewis Stanley

(56) References cited:
- DE-A- 2 432 024
- IBM TECHNICAL DISCLOSURE BULLETIN, vol. 25, no. 6, November 1982, page 3054, New York, US; D.J. BRADLEY et al.: "Determination of code coverage"
- IBM TECHNICAL DISCLOSURE BULLETIN, vol. 24, no. 2, July 1981, page 1192, New York, US; R.J. BOWDRY et al.: "Permanent breakpoints using hardware trace"

## Description

### METHOD AND APPARATUS FOR MEASURING PROGRAM EXECUTION

### Notice Regarding Copyrighted Material

A portion of the disclosure of this patent document contains material which is subject to copyright protection. The copyright owner has no objection to the facsimile reproduction by anyone of the patent document or the patent disclosure, as it appears in the Patent and Trademark Office file or records, but otherwise reserves all copyright rights whatsoever.

### Background Of The Invention

This invention relates to computer software testing tools, and more particularly, it relates to a method and apparatus for determining which program statements have been executed.

An important aspect of software quality assurance is the comprehensiveness of the testing. Without the assistance of special tools, it is difficult, if not impossible, to accurately determine "coverage", i.e., which program instructions are executed when test cases are run. It is therefore difficult to know which test cases to run or when to stop test case development.

In the prior art, there are two principal types of tools for measuring the coverage of test cases. The first type are tools that use pre-processors to modify source code before it is compiled. Procedure calls are inserted at the beginning of program blocks for keeping track of whether a block has been executed. There are several drawbacks to this approach. These tools are language-specific; that is, the preprocessors must be tailored to the syntax of the source language. The size of the object code is changed by the procedure calls, which can change the execution characteristics of the program. Programs must be pre-processed and recompiled for measurement, and then restored or recompiled for production use or product release. the use of preprocessors not only requires an extra step, it also makes these tools impractical for measuring operating system code and time-critical programs.

The second type of coverage measurement tool in the prior art uses sampling techniques to periodically read the program counter and accumulate statistics on how much time is spent in predetermined memory address ranges. Histograms are developed which can be matched up with the program's load map. these tools are useful for evaluating program performance, but, because they use sampling, they cannot be used to determine which instructions have not been executed.

What is needed is a true coverage measurement tool that does not require source code preprocessing, can be used on any type of program, and does not require modification of existing programs or test suites.

IBM Technical Disclosure Bulletin Vol.25, No.6, November 1982, page 3054, "Determination of Code Coverage" by D. J. Bradley et al discloses a method of determining code coverage as follows:-

### 1. Find and mark conditional instructions.

A. Identify those areas to be marked for cover analysis.
B. Examine the identified sections of the code and replace the conditional instructions with a call instruction to a special handler.
C. Construct a table containing address and original opcode of the marked conditional instructions.

### 2. Execute test cases and determine coverage.

A. Test cases designed to exercise all portions of the code.
B. When the special handler is called (from a replaced conditional instruction), search the table of 1C to determine the instruction that should be executed.
C. Simulate the original instruction by the special handler.
D. Update the table to show which direction of the branch was taken.
E. If both directions of the branch have been taken, replace the call to the special handler by the original opcode to lessen the overhead and subsequent executions.
F. Return control to the program at the point determined by the simulation of the instructions.
G. After all test cases have been executed, display the table to show all paths that have not been executed and the address at which they are.

IBM Technical Disclosure Bulletin Vol.24, No.2, July 1981, page 1192, "Permanent Breakpoints using Hardware Trace" R. J. Bowdry et. al. relates to the provision of "permanent" program breakpoints in which simple manner and without performance degradation the first two bytes of an instruction are replaced with a supervisor call (SVC) instruction while saving the replaced two bytes. When the SVC instruction is encountered during program execution, the debugging facility gains control. To achieve permanent breakpoints, two trace interrupts are taken following the initial SVC that caused the debugging program to get control at the breakpoint. After the second trace interrupt, the break-point is restored and the trace bit is turned off.

The invention seeks to provide an improved technique for determining which one of a subset of a set of executable instructions in a program are not executed when the program is run.

According to the present invention, there is provided a method of determining which ones of a selected subset of a first set of executable instructions are not executed when a computer program, including the first set of executable instructions, is executed as defined in claim 1.

The invention also provides a system for executing a computer program to determine which ones of a selected subset of a first set of executable instructions are not executed when the computer program is executed as defined in claim 9.

Thus this invention provides a coverage measurement tool that measures which instructions have been executed and which instructions have not been executed, while overcoming the disadvantages inherent in the prior art. No pre-processing or sampling is used. The tool is easy to use, and measurements can be performed in the tester's normal test environment. The measurement is performed using the same executable object code version of the program that will be released after testing. Different programs, or multiple tests of the same program, can be measured at the same time. The output of the measurement can be mapped directly into high-level language source statements. The size of the object code is not changed. The measurement tool does not noticeably degrade execution performance of the tested program.

According to the invention, machine-level instructions are selected for measurement and each of those instructions is replaced by a measurement instruction. Preferably, the measurement instruction is an interrupt-causing instruction. The program containing the measurement instructions is then executed. When a measurement instruction is executed, the measured (replaced) instruction is identified and a value is stored to indicate that the measured instruction has been executed. Then the measured instruction is restored by replacing the measurement instruction with the original instruction, and execution resumes with the restored instruction. The effect on execution performance (as measured by elapsed time) is minimal, because the replacement is performed only once for each selected instruction, even if the selected instruction is executed many times.

In one embodiment of the invention, the first instruction of each block of executable object code compiled from a source language statement is selected for measurement. This provides statement level coverage measurement. Each selected instruction is replaced by a breakpoint instruction, which causes non-maskable interrupts. To accommodate multiple users of the measured program, the measurement is run on a duplicate copy of the program. The results of the measurement are stored in a bitmap which can be used to generate a variety of useful outputs, such as a marked-up copy of the source code indicating which source-language statements have or have not been executed. These outputs can significantly increase the efficiency and effectiveness of the quality assurance effort.

### Brief Description of the Drawings

Fig. 1 is a block diagram of a computer memory apparatus for the preferred embodiment.

Fig. 2 is a flow chart illustrating the operation of the ENABLE function.

Fig. 3 is a flow chart illustrating the operation of the MEASURE function.

Fig. 4 is a flow chart illustrating the operation of the program in response to a breakpoint interrupt.

Fig. 5 is a flow chart illustrating the operation of the SAVE function.

Fig. 6 is a flow chart illustrating the operation of the RESET function.

Fig. 7 is a flow chart illustrating the operation of the DISABLE function.

Fig. 8 is an example of a MARKUP report.

Fig. 9 is an example of the DISPLAYoutput.

Fig. 10 is an example of the SORT output.

Fig. 11 is an example of the ORDER output.

Fig. 12 is a pseudo-code representation of the algorithm used to generate the ORDER report.

### Detailed Description of the Preferred Embodiment

In the preferred embodiment the method of the invention is practiced by a computer program written in the "TAL" language and executed on a "Tandem" "NonStop" computer under the control of the "GUARDIAN 90" operating system. ("Tandem", "TAL", "NonStop", and "GUARDIAN 90" are trademarks of Tandem Computers, Inc., of Cupertino California. Reference manuals for the "TAL" language and the "GUARDIAN 90" operating system, and the "NonStop" System Description Manual are available from Tandem Computers, Inc.) The following detailed description, with reference to the drawings, will enable those of ordinary skill in the art to make and use the invention.

COVER is a set of program modules, some of which are in the COVER command interpreter (COVERCOM), some in the monitor (CVRMON) and some in the operating system (in the breakpoint interrupt handler). In the description that follows, references to pages in the appendix will be provided along with references to flow chart blocks.

These references to the Source Code Appendix are in the form "(Annn)", where "nnn" is a page number in the Appendix A. The Source Code will provide a complete disclosure of the preferred embodiment. However, one of ordinary skill in the relevant art will be able to practice the invention without reference to the Source Code listing from the description and charts herein.

The preferred embodiment measures statement coverage. Statement coverage is a measure of which source code statements were (and were not) executed. Other types of coverage (such as code coverage, which is a measure of the execution of machine instructions) are within the scope of the invention, because the actual measurement is performed on selected machine instructions in the object code.

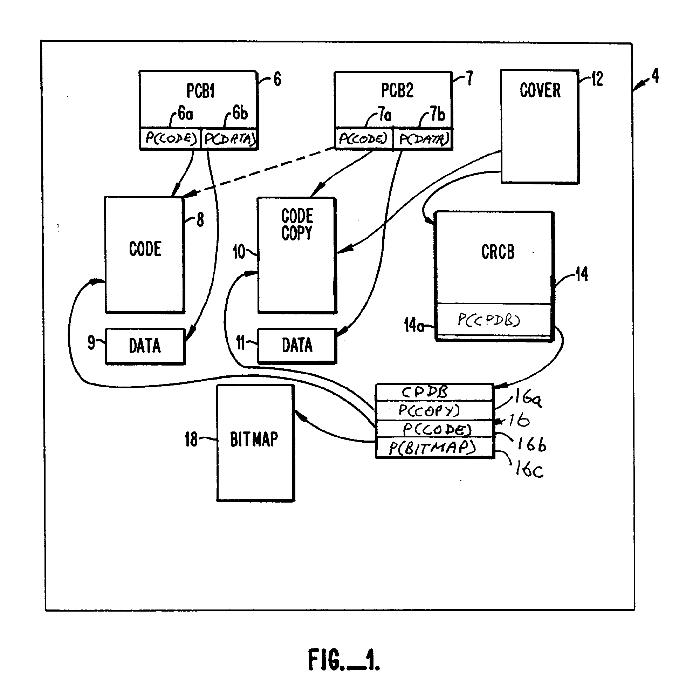

Referring to Fig. 1, a simplified bock diagram illustrates the logical organization of a computer memory apparatus 4 for implementing the preferred embodiment of the invention. Two Process Control Blocks (PCBs) 6,7 are shown. In this computer system, there are up to 256 active PCBs, each controlling a process, or task. A process is a running invocation of a program associated with a single user. A single program can execute multiple processes for multiple users. PCB1 6 contains a pointer 6a pointing to program code segment 8 and a pointer 6b pointing to data area 9. PCB2 7 contains a pointer 7a which initially (before a COVER measurement is started) points (dotted arrow) to code segment 8, and a pointer 7b pointing to data area 11. When the COVER program 12 is enabled, it establishes Cover Routine Control Block (CRCB) 14. When COVER initiates a measurement on a particular process (PIN), it establishes a Cover PIN Data Block (CPDB) 16 for that process, and writes the CPDB address into one of the 256 pointers P(CPDB) 14a in the CRCB. COVER then makes a copy 10 of code segment 8, and saves a pointer P(CODE) 16b to code segment 8 and pointer P(COPY) 16a to copy 10 into CPDB 16. COVER inserts measurement-causing instructions at selected locations in code copy 10, establishes a bitmap 18 for storing results of the measurement, and stores a pointer to copy 10 in pointer 7a of PCB2 7. A pointer P(BITMAP) 16c to bitmap 18 is stored in CPDB 16. The system will execute Copy 10.

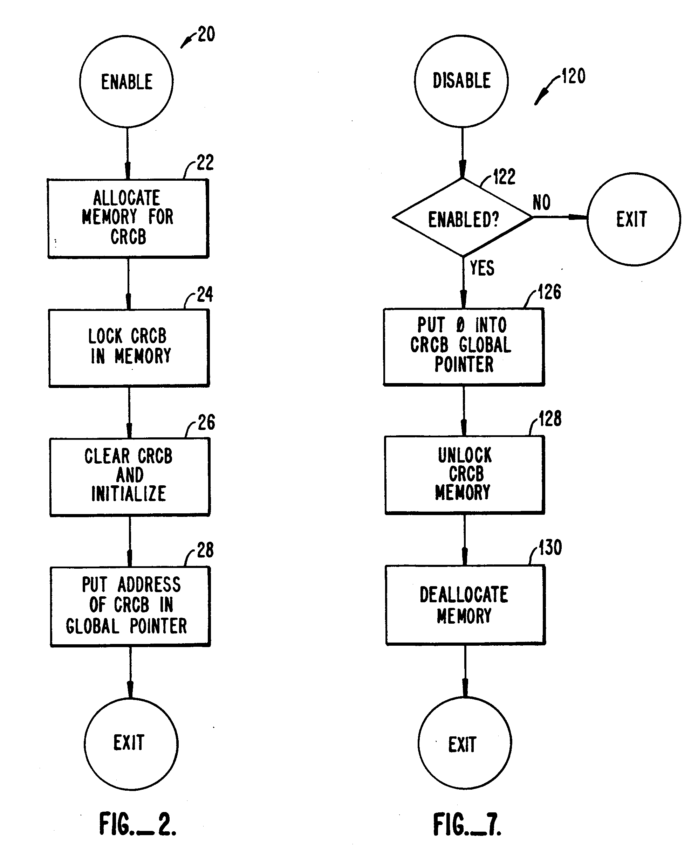

COVER must be enabled by the system operator for a particular cpu (central processing unit) before users can invoke the measurement facility on that cpu. (This embodiment is implemented on a system having multiple cpu's). The system operator issues the ENABLE command to allow measurements on a particular CPU. Referring to Fig. 2, flow chart 20 illustrates the operation of COVER in response to the ENABLE command (A-663-4). At block 22 (A-123), memory is allocated for a Cover Routine Control Block (CRCB). The format of the CRCB data structure is shown in Table I (A-296-7). At block 24 (A-123), the CRCB memory space is locked to make it memory resident and to allow absolute addressing. The CRCB is initialized at block 26 (A-123). The CRCB is cleared (to zeroes) and then the verifier ("CovR" in this embodiment) and other header fields are set. At block 28 (A-123), the address of the CRCB is stored in a fixed predetermined location in memory (global pointer). The address of the global pointer is known to the operating system, including the breakpoint interrupt handler. COVER is now enabled, and users may perform measurements.
VERIFIER "CovR"
VERSION
XCVRN ^ PIN
PrivEnabled
MemoryRatio
TraceBuffer
Files to Measure [0:127]
Control by PIN [0:255]

### TABLE I

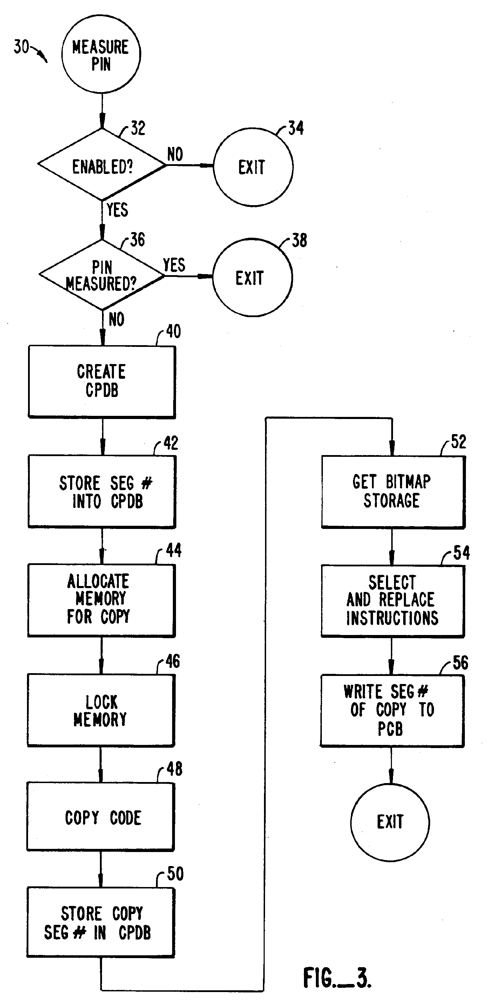

The measurement is performed as follows. The program "COVERCOM" is run to invoke the COVER command interpreter. To start a measurement of a process, the command "MEASURE" is issued with a process identification number ("PIN") identifying the process to be measured. Referring to Fig. 3, a flow chart 30 illustrates the operation of COVER in response to the MEASURE command (A-541). At block 32 (A-543), a test is made to determine whether COVER is enabled. The address in the global pointer predetermined location in memory is read. If the address is non-zero, then COVER is enabled. If COVER is not enabled, then no measurement can be performed and the program exits (block 34) and informs the user with an error message.

If COVER is enabled, then at block 36 (A-543-4), a test is made to determine whether there is a measurement in progress on the specified process. (Only one measurement is allowed at a time on a process). As seen in Table I, there is an array of 256 ControlByPin fields (one for each possible process on a cpu) in the CRCB. Each field contains a pointer to a Cover PIN Data Block, if that process is being measured. If a process is not being measured, then the field corresponding to that PIN is zero. Thus, if the entry for the requested process is non-zero, then, at block 38, the COVER program exits and informs the user with an error message. If the entry for the requested process is zero, then COVER initiates a measurement.

At block 40, a Cover Pin Data Block (CPDB) is established for the requested process and the address is written into the CRCB ControlByPin entry for this process. (Alternatively, the Cover Pin Data Blocks may be established when COVER is enabled; in that case, the state field is used to indicate whether a measurement is in progress for a PIN.) Table II (A-296) shows the format of a CPDB. At block 42, (A-125) the segment number for the program code is read from the code.seg field in the PCB for this process and written into the CPDB at field UC.SEG. (The segment number is equivalent to the starting address of the code because programs start on memory segment boundaries. The program counter measures the offset into a segment.) At block 44, (A-126, A-686) a block of memory is allocated for a copy of the program code. At block 46 (A-687), the memory is block "locked" to ensure that it will remain adressable at all times for the duration of the measurement.
State
Eversaved
Save Vol
UC. Seg
UC. CopySeg
UC. Name
UC. Timestamp
UC. SpaceCount
UC. Space Size
UC. Bitmap Ptr.

### TABLE II

At block 48 (A-686), the program code is copied into the allocated memory block. At block 50 (A-687), the segment number for this memory block is written into the CPDB at location UC.CopySeg. At block 52 (A-116-7), memory is obtained (and locked down) for a "bitmap". The bitmap is used to store the results of the measurement of the process. Each bit in the bitmap corresponds to a word (2-bytes, the length of an instruction) in the object code. The bitmap is initialized to zeroes and its address is stored in the CPDB at field UC.Bitmap.Ptr.

The machine instructions to be measured are now selected. Programs that are compiled on Tandem compilers with the "'Inspect' symbols" option contain a list of "statement starters" pointing to the first machine code instruction of each compiled source language statement. ("Inspect" is a trademark of Tandem Computers Inc.) For the statement coverage of this embodiment, these statement starting machine instructions are selected as the set of instructions to be measured. In other embodiments, other means may be used to select the measured instructions. For example, all of the code instructions may be selected (code coverage), so long as instructions can be distinguished from data in the object file.

At block 54 (A-157-9), the statement starters are read and measurement instructions are written in place of the statement-starting machine code instructions. In this embodiment, Breakpoint instructions are used as the measurement instructions. Breakpoint instructions are used in this computer system to cause interrupts and turn control over to the corresponding interrupt handler in the operating system. In other embodiments, other measurement instructions may be used, such as an SVC (Supervisor call) or an instruction with an invalid opcode. Subroutine calls may also be used, but it is preferable to use non-maskable interrupt-causing instructions to perform the measurement from within the operating system.

At block 56 (A-128), the segment number of the code copy (UC.CopySeg) is written into the PCB for this process, at the code.seg field. This field in the PCB stores the segment number for the program used to execute the process, and is the same field from which the original code segment number was copied to UC.seg. UC.seg thus stores the address of the "original" code, and the PCB has the address of the code copy. This causes the system to use the code copy, with the breakpoints, to execute this process. Other processes may use the unmodified original code while the measurement takes place on the copy.

As the code copy executes, whenever a selected instruction would be executed a breakpoint instruction is executed first. This causes a breakpoint interrupt.

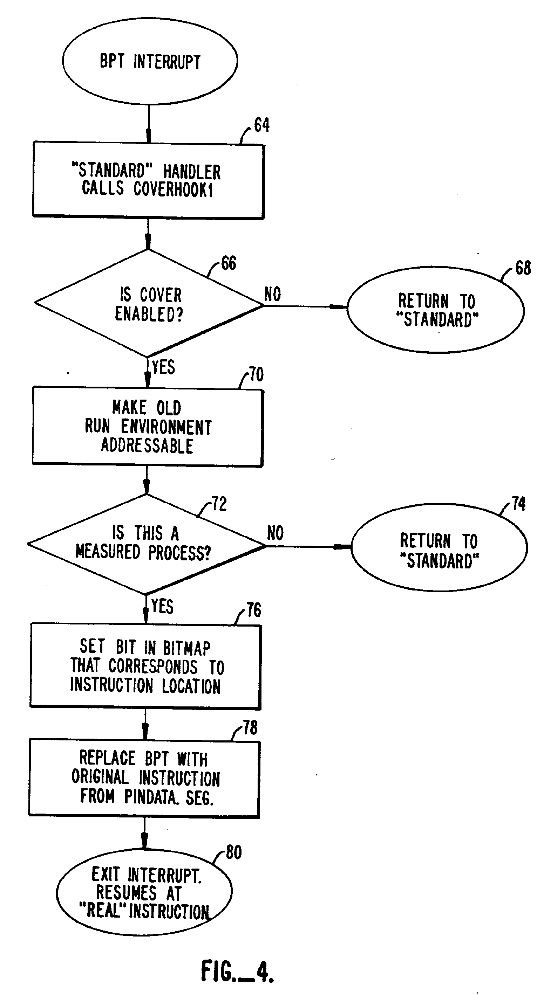

Referring to Fig. 4, a flow chart 62 shows the effect of the breakpoint interrupt. At block 64 (A-84), the breakpoint interrupt handler calls the COVER procedure. At block 66 (A-86), a test is made to determine whether COVER is enabled. This is done by reading the global pointer where the CRCB address is stored and determining whether the adress is non-zero. If COVER is not enabled, the called program returns (block 68) to the "standard" interrupt handler. If COVER is enabled, then, at block 70 (A-86), the interrupted run environment is made addressable. Then, at block 72 (A-86), a test is made to determine whether the interrupted process is a measured process. The PIN of the interrupted PCB is read from a global memory location and used to index into the CRCB to determine whether there is a non-zero address pointer to a CPDB for this PIN. If the pointer for this PIN is zero, then this process is not being measured and, at block 74, control is returned to the standard interrupt handler. If the pointer for this PIN is non-zero, then the STATE field in the CPDB is checked. This field indicates whether the measurement is actually running. (While the program is being copied and breakpoints are being inserted, the state field is used to indicate this interim state).

If the process is being measured, then, at block 76 (A-86), the appropriate bit in the bitmap is set to indicate that the instruction has been executed. The bit corresponding to the interrupted (measured) instruction is found as follows: The interrupted instruction is identified by reading the program counter in the program environment register to get the offset (in words) into the segment for the breakpoint instruction that caused the interrupt; this word offset is used as a bit offset from the bitmap starting address stored (at UC.BitmapPtr) in the CPDB. The bit at that offset is set to one to indicate execution of the corresponding measured instruction.

After setting the bit in the bitmap, the breakpoint instruction in the code copy is replaced with the actual instruction to be executed (block 78, A-87). The offset from the program counter is concatenated to the segment number in the UC.Seg field in the CPDB. A low order 0 is added on (to indicate 0 byte offset into the instruction) to arrive at the 32 bit address of the instruction. The address of the instruction in the code copy is obtained in the same manner, using the UC.copy.seg field in the CPDB and the offset from the program counter. The measured instruction from the original program is copied into the executing code copy, replacing the breakpoint instruction. At block 80 (A-88), control is passed back to the program for execution of the actual instruction.

In this embodiment, the breakpoint instruction is also used for debugging. Therefore, before replacing the breakpoint instruction with the actual instruction, a test is made to determine whether a debug break point has been set. If the debugger has set a breakpoint, then COVER will find a breakpoint in the original code. A breakpoint table stores the instruction replaced by a debug breakpoint. COVER will use the instruction in the breakpoint table to replace the breakpoint in the copy. Control returns to the interrupt handler instead of to the program. The interrupt handler will execute the debug routine for this breakpoint. (It will be understood that this routine is necessary only because this embodiment uses the same breakpoint instruction that is used by the debugger. In other embodiments, a unique interrupt-causing instruction can be used, or concurrent debugging can be prohibited.)

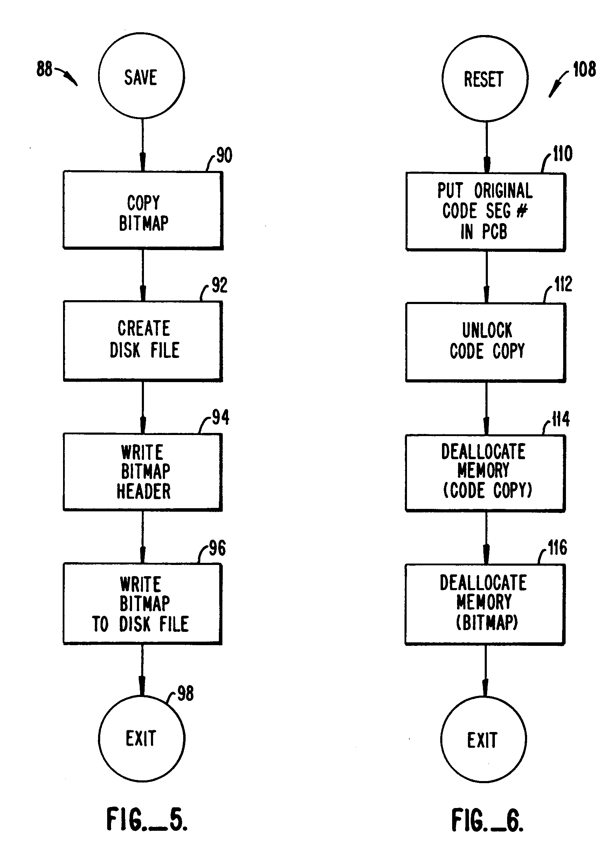

The user can issue the SAVE command at any point to save the bitmap data. Referring to Fig. 5, flow chart 88 illustrates the operation of COVER in response to the SAVE command. At block 90 (A-12), the bitmap for the specified PIN is copied to another location in memory. At block 92 (A-23), a disk file is created for saving the bitmap. Then at block 94 (A-23) a header is written in the bitmap file, with the measured program's name, its time stamp, etc. using the data in the CPDB for the measured process. Then at block 96 (A-23) the bitmap is written to this disk file. The "eversaved" field in the CPDB is updated to indicate that the bitmap has been saved. Also, when a process terminates, if that process has been measured, the system monitor will save the bit map data.

The RESET command can be issued by the user or by the operating system after a save operation. Referring to Fig. 6, a flowchart 108 illustrates the operation of the program in response to the RESET command. At block 110 (A-670-1), the original code segment number is copied from the CPDB field UC.SEG. into the PCB, causing the original code to be executed instead of the copy. At block 112 (A-130, A-698), the code copy memory space is unlocked. At block 114 (A-130, A-689), the memory space is freed (deallocated), and at block 116 (A-130, A-140) the bitmap space is freed. The measurement is thus terminated.

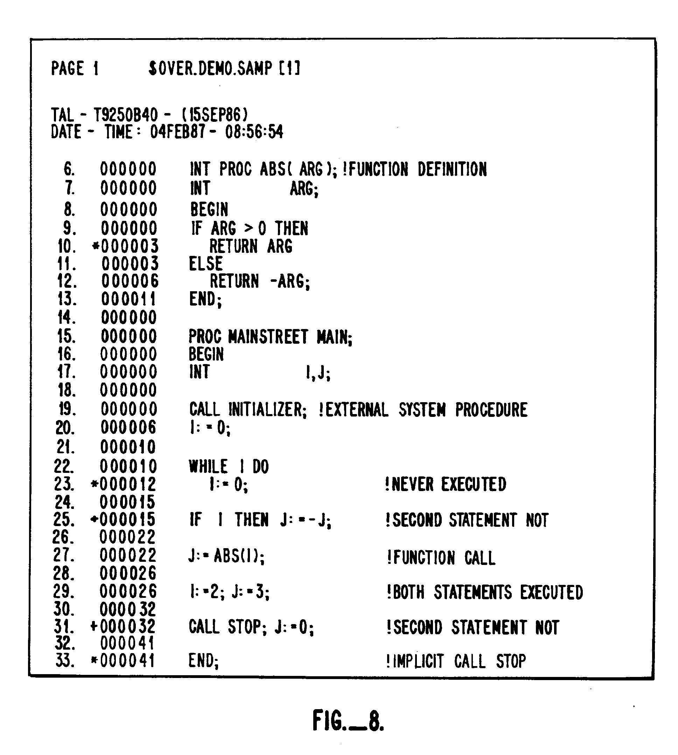

Referring to Fig. 7, the DISABLE command is illustrated. The DISABLE command performs the opposite functions of the ENABLE command. At block 122 (A-660), the program tests to determine whether COVER is enabled, and if not it exits. At block 126 (A-122), zeroes are written to the global pointer containing the address of the CRCB. At block 128 (A-122), the CRCB memory is unlocked. At block 130 (A-122), the CRCB memory space is freed (deallocated).

The bitmap is used to generate various useful outputs.

One useful output report ("MARKUP") (A-505-618) generated in the preferred embodiment is a marked source code listing such as the one shown in Fig. 8. Statements that were not executed are marked with an asterisk (*). If more than one statement occurs on the same line, a plus (+) indicates that a statement has been executed but some other statement has not executed. This report is generated using the same symbols table in the object file which was used to insert the breakpoint instructions. The symbols table indicates the offsets into the object code at which compiled source statements start. These same offsets (in bits instead of words) are used to index into the bitmap to test whether a statement-starting instruction has been executed.

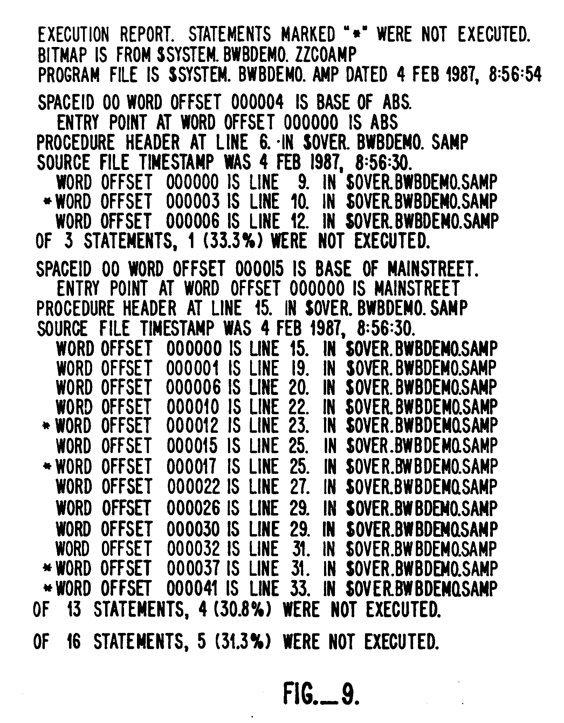

The "DISPLAY" command displays a listing of all statements' source file line numbers in the measured program. All unexecuted statements are marked with an asterisk. For each procedure and for the total program, statistics are included indicating the number of statements and the percentage of those not executed. An example is shown in Fig. 9.

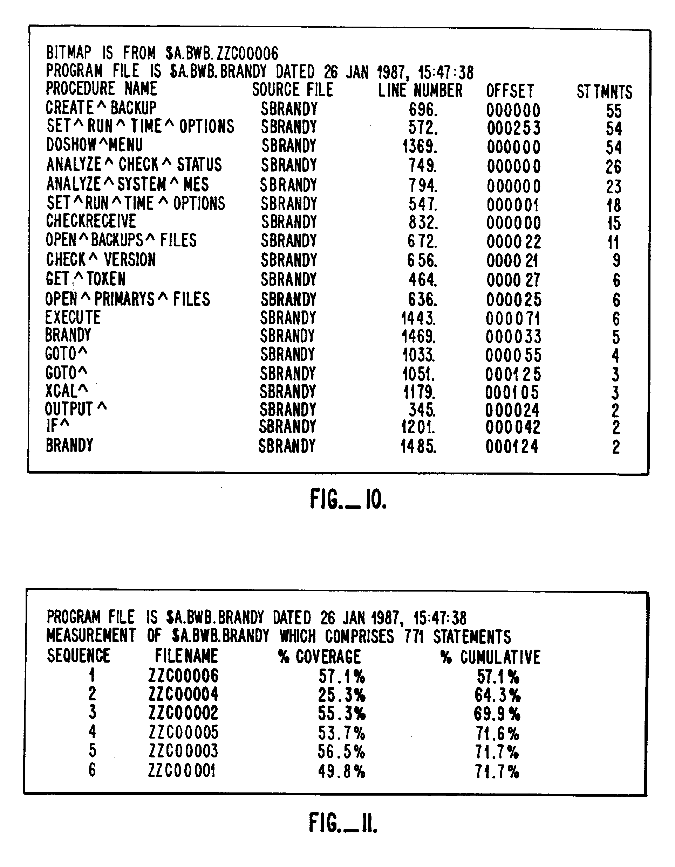

Another useful report ("SORT") (A-641-52) is shown in Fig. 10. This report reports all sequences of over n unexecuted contiguous statements, where n is specified by the user/requestor. The statement starters are read and compared to the bitmap. Unexecuted, contiguous statements are tallied until an executed statement is found, and a new tally is started. The tallys are then sorted.

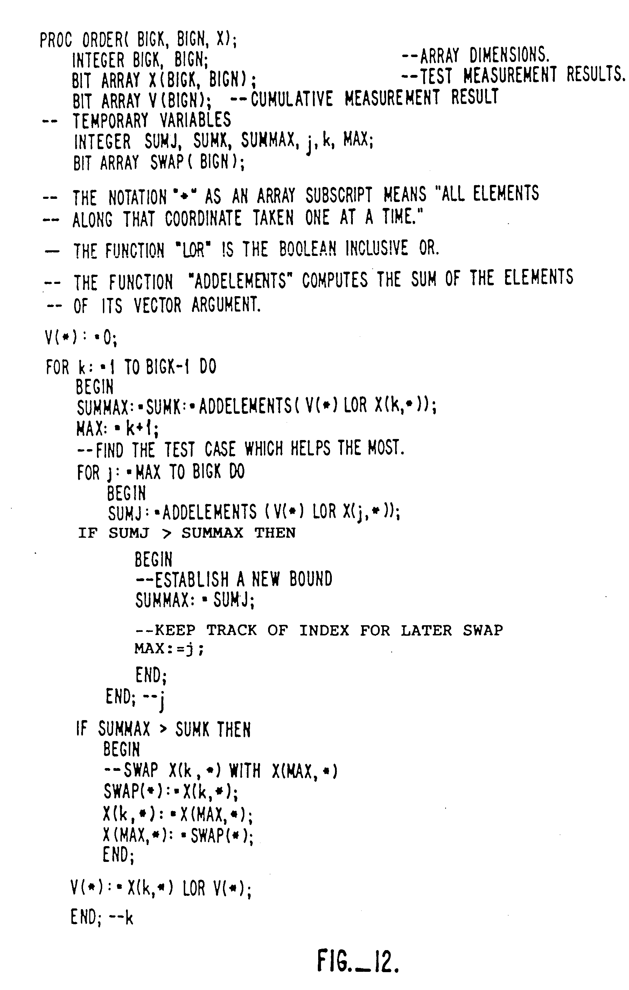

The "ORDER" report (A-555-75) is shown in Fig. 11. Given an existing set of K test cases, it is useful to order the test cases so that the test with the highest coverage is run first. After this test, the next test case is selected so that it adds the most to the total coverage., etc. This will expose the program to the broadest testing in the shortest time.

First the bit maps are compressed to include only the bits corresponding to source code statement starters. If the program has N statements, the compressed bit maps for the K test cases form a bit matrix X(K,N). Referring to Fig. 12, a pseudo-code version of the algorithm for ordering the test cases is given. First, the test case J giving the most coverage is identified. Then each of the remaining bit maps is OR'ed (inclusive or) with the bit map for each of the K-1 remaining test cases, to find the combination giving the highest coverage. The combined bit map for these two cases is then or'ed with each of the K-2 remaining cases, etc.

Other boolean operations, such as AND, XOR, can also be performed on specified bit maps on request. The OR and exclusive or (XOR) can be used on bitmaps A and B to indicate the incremental increase provided by test cases. The function (A or B) XOR A determines what test B covers that test A does not cover. The AND operation indicates which statements were tested by all test cases.

In summary, a novel technique has been described for measuring the execution of a computer program.

## Claims

1. A method of determining which ones of a selected subset of a first set of executable instructions are not executed when a computer program (8), including the first set of executable instructions, is executed, comprising the steps of:
making (48) a program copy (10) from said computer program (8), said program copy comprising a second set of executable instructions identical to said first set of executable instructions;
storing said program copy (10);
modifying the stored program copy by replacing (54) each one of said selected subset of said second set of executable instructions in said program copy (10) with an interrupt-causing instruction;
initiating the execution of the modified program copy;
in response to the execution of each one of the interrupt-causing instructions in the modified program copy performing the steps of:
locating in said first set of executable instructions an instruction identical to the instruction replaced by the executed one of the interrupt-causing instructions;
restoring (78) the replaced instruction by writing said located instruction in place of the executed interrupt-causing instruction in said modified program copy;
storing (76) an indication that the replaced instruction was restored; and
executing (80) the restored instructions; and determining which ones of the selected subset of instructions have been restored and executed by reading stored indication thereof.

2. The method of claim 1, wherein the interrupt-causing instruction is a breakpoint instruction.

3. The method of claim 1, wherein the interrupt-causing instruction is an invalid instruction.

4. The method of claim 1, further comprising the step of reporting which ones of said selected subset of instructions have been restored and executed.

5. The method of claim 1, further comprising the step of reporting which ones of the selected subset of instructions have not been restored and executed.

6. The method of claim 1, further comprising the step of, in response to the execution of a measurement instruction, indicating that the instruction replaced by the interrupt-causing instruction will be executed.

7. The method of claim 6, wherein said indicating step comprises storing in said computer system an indication that the interrupt-causing instruction has executed.

8. The method of claim 7, further comprising the step of reporting that each restored instruction has been executed.

9. A system for executing a computer program (8) to determine which ones of a selected subset of a first set of executable instructions are not executed when the computer program, including said first set of executable instructions, is executed, comprising:
memory means (14) for storing programs and data, said computer program being stored in said memory means (14);
copying means which makes a program copy (10) of the computer program and stores it in said memory means (14), the program copy comprising a second set of executable instructions identical to said first set of executable instructions;
processing means coupled to said memory means (14) which modifies the stored program copy by replacing (54) each one of the selected subset of the second set of executable instructions in said program copy with an interrupt-causing instruction and then executes the program copy and, which in response to the execution of each one of the interrupt-causing instructions, in said modified program copy, locates in said first set of executable instructions an instruction identical to the instruction replaced by the executed one of the interrupt-causing instructions, restores the replaced instruction by writing said located instruction in place of the executed interrupt-causing instruction in said modified program copy, executes (80) the restored instruction and stores an indication in the memory that the replaced instruction was restored; and
reporting means which reports (76) which ones of the selected subset of instructions have been restored and executed by reading stored indication thereof from the memory.

10. The system of claim 9, wherein the interrupt-causing is a breakpoint instruction.

11. The system of claim 9, wherein the interrupt-causing instruction is an invalid instruction.

## Patentansprüche

1. Verfahren zum Bestimmen, welche eines ausgewählten Untersatzes eines ersten Satzes von ausführbaren Befehlen nicht ausgeführt werden, wenn ein Computerprogramm (8), das den ersten Satz von ausführbaren Befehlen enthält, ausgeführt wird, enthaltend die Schritte:
Erstellen (48) einer Programmkopie (10) des Computerprogramms (8), wobei die Programmkopie einen zweiten Satz von ausführbaren Befehlen enthält, der mit dem ersten Satz von ausführbaren Befehlen identisch ist,
Speichern der Programmkopie (10),
Modifizieren der gespeicherten Programmkopie durch Ersetzen (54) jedes ausführbaren Befehls des ausgewählten Untersatzes des zweiten Satzes in der Programmkopie (10) mit einem eine Unterbrechung verursachenden Befehl,
Starten der Ausführung der modifizierten Programmkopie,
Durchführen der folgenden Schritte in Abhängigkeit von der Ausführung jedes der eine Unterbrechung verursachenden Befehle in der modifizierten Programmkopie:
Lokalisieren eines mit dem durch den ausgeführten der eine Unterbrechung verursachenden Befehle ersetzten Befehl identischen Befehls in dem ersten Satz von ausführbaren Befehlen,
Wiederherstellen (78) des ersetzten Befehls durch Schreiben des lokalisierten Befehls an Stelle des ausgeführten eine Unterbrechung verursachenden Befehls in die modifizierte Programmkopie,
Speichern (76) einer Indikation, daß der ersetzte Befehl wiederhergestellt wurde, und
Ausführen (80) der wiederhergestellten Befehle, und
Bestimmen, welche des ausgewählten Untersatzes von Befehle wiederhergestellt und ausgeführt wurden, durch Lesen deren gespeicherter Indikation.

2. Verfahren nach Anspruch 1,
dadurch gekennzeichnet,
daß der eine Unterbrechung verursachende Befehl ein Programmstopp-Befehl ist.

3. Verfahren nach Anspruch 1,
dadurch gekennzeichnet,
daß der eine Unterbrechung verursachende Befehl ein ungültiger Befehl ist.

4. Verfahren nach Anspruch 1,
dadurch gekennzeichnet,
daß es ferner den Schritt des Berichtens enthält, welche des ausgewählten Untersatzes von Befehlen wiederhergestellt und ausgeführt wurden.

5. Verfahren nach Anspruch 1,
dadurch gekennzeichnet,
daß es ferner den Schritt des Berichtens enthält, welche des ausgewählten Untersatzes von Befehlen nicht wiederhergestellt und ausgeführt wurden.

6. Verfahren nach Anspruch 1,
dadurch gekennzeichnet,
daß es ferner den Schritt des Bezeichnens in Abhängigkeit von der Ausführung eines Meßbefehls enthält, daß der durch den eine Unterbrechung verursachenden Befehl ersetzte Befehl ausgeführt werden wird.

7. Verfahren nach Anspruch 6,
dadurch gekennzeichnet,
daß der Bezeichnungsschritt das Speichern einer Indikation, daß der eine Unterbrechung verursachende Befehl ablief, in dem Computersystem enthält.

8. Verfahren nach Anspruch 7,
dadurch gekennzeichnet,
daß es ferner den Schritt des Berichtens enthält, daß jeder wiederhergestellte Befehl ausgeführt wurde.

9. System zum Ausführen eines Computerprogramms (8) zum Bestimmen, welche eines ausgewählten Untersatzes eines ersten Satzes von ausführbaren Befehlen nicht ausgeführt werden, wenn das Computerprogramm, das den ersten Satz von ausführbaren Befehlen enthält, ausgeführt wird, enthaltend:
Speichereinrichtungen (14) zum Speichern von Programmen und Daten, wobei das Computerprogramm in den Speichereinrichtungen (14) gespeichert ist,
Kopiereinrichtungen, die eine Programmkopie (10) des Computerprogramms erstellen und sie in den Speichereinrichtungen (14) speichern, wobei die Programmkopie einen zweiten Satz von ausführbaren Befehlen enthält, der mit dem ersten Satz von ausführbaren Befehlen identisch ist,
mit den Speichereinrichtungen (14) gekoppelte Verarbeitungseinrichtungen, die die gespeicherte Programmkopie durch Ersetzen (54) jedes ausführbaren Befehls des ausgewählten Untersatzes des zweiten Satzes in der Programmkopie mit einem eine Unterbrechung verursachenden Befehl modifizieren und dann die Programmkopie ausführen, und die in Abhängigkeit von der Ausführung jedes der eine Unterbrechung verursachenden Befehle in der modifizierten Programmkopie einen mit dem durch den ausgeführten der eine Unterbrechung verursachenden Befehle ersetzten Befehl identischen Befehls in dem ersten Satz von ausführbaren Befehlen lokalisiert, den ersetzten Befehl durch Schreiben des lokalisierten Befehls an Stelle des ausgeführten eine Unterbrechung verursachenden Befehls in die modifizierte Programmkopie wiederherstellt, den wiederhergestellten Befehl ausführt und eine Indikation in dem Speicher speichert, daß der ersetzte Befehl wiederhergestellt wurde, und
Berichteinrichtungen, die berichten, welche des ausgewählten Untersatzes von Befehlen wiederhergestellt und ausgeführt wurden, durch Lesen deren in dem Speicher gespeicherter Indikation.

10. System nach Anspruch 9,
dadurch gekennzeichnet,
daß der eine Unterbrechung verursachende Befehl ein Programmstopp-Befehl ist.

11. System nach Anspruch 9,
dadurch gekennzeichnet,
daß der eine Unterbrechung verursachende Befehl ein ungültiger Befehl ist.

## Revendications

1. Une méthode pour déterminer quelles instructions d'un sous-ensemble sélectionné d'un premier ensemble d'instructions exécutables n'ont pas été exécutées lorsqu'un programme d'ordinateur (8), comprenant le premier ensemble d'instructions exécutables, est exécuté, comprenant les étapes consistant à :
faire (48) une copie de programme (10) à partir du dit programme (8) d'ordinateur, la dite copie de programme comprenant un second ensemble d'instructions exécutables identique au dit premier ensemble d'instructions exécutables ;
mémoriser la dite copie de programme (10) ;
modifier la copie de programme mémorisée en remplaçant (54) chacune des instructions du dit sous-ensemble sélectionné du dit second ensemble d'instructions exécutables dans la dite copie de programme (10) par une instruction causant une interruption ;
initier l'exécution de la copie de programme modifié ;
en réponse à l'exécution de chacune des instructions causant une interruption dans la copie de programme modifié accomplir les étapes consistant à :
localiser dans le dit premier ensemble d'instructions exécutables une instruction identique à l'instruction remplacée par celle des instructions causant une interruption qui a été exécutée ;
restituer (78) l'instruction remplacée en écrivant la dite instruction localisée à la place de l'instruction causant une interruption qui a été exécutée dans la dite copie de programme modifié ;
mémoriser (76) une indication selon laquelle l'instruction remplacée a été restituée ; et
exécuter (80) les instructions restituées ; et déterminer quelles instructions du sous-ensemble sélectionné d'instructions ont été restituées et exécutées en lisant l'indication mémorisée de celles-ci.

2. La méthode de la revendication 1, dans laquelle l'instruction causant l'interruption est une instruction de point d'arrêt.

3. La méthode de la revendication 1, dans laquelle l'instruction causant le point d'arrêt est une instruction non valable.

4. La méthode de la revendication 1, comprenant en outre l'étape consistant à établir un rapport sur celles des instructions du dit sous-ensemble sélectionné qui ont été restituées et exécutées.

5. La méthode de la revendication 1, comprenant en outre l'étape consistant à établir un rapport sur celles des instructions du sous-ensemble sélectionné d'instructions qui n'ont pas été restituées et exécutées.

6. Le procédé de la revendication 1, comprenant en outre l'étape consistant, en réponse à l'exécution d'une instruction de mesure, à indiquer que l'instruction remplacée par l'instruction causant l'interruption sera exécutée.

7. La méthode de la revendication 6, dans laquelle la dite étape pour fournir une indication comprend la mémorisation dans le dit système d'ordinateur d'une indication selon laquelle l'instruction causant l'interruption a été exécutée.

8. La méthode de la revendication 7, comprenant en outre l'étape consistant à rapporter que chaque instruction restituée a été exécutée.

9. Système pour exécuter un programme d'ordinateur (8) pour déterminer quelles instructions d'un sous-ensemble sélectionné d'un premier ensemble d'instructions exécutables n'ont pas été exécutées lorsque le programme d'ordinateur comprenant le dit premier ensemble d'instructions exécutables est exécuté, comprenant :
des moyens de mémoire (14) pour stocker les programmes et les données, le dit programme d'ordinateur étant stocké dans les dits moyens de mémoire (14) ;
des moyens de copie qui réalisent une copie de programme (10) du programme d'ordinateur et la stockent dans les moyens de mémoire (14), la copie de programme comprenant un second ensemble d'instructions exécutables identique au dit premier ensemble d'instructions exécutables ;
un moyen de traitement couplé au dit moyen de mémoire (14) qui modifie la copie de programme mémorisée en remplaçant (54) chacune des instructions du sous-ensemble sélectionné du second ensemble d'instructions exécutables dans la dite copie de programme par une instruction causant une interruption, et qui ensuite exécute la copie de programme et qui, en réponse à l'exécution de chacune des instructions causant une interruption, dans la dite copie de programme modifié, localise dans le dit premier ensemble d'instructions exécutables une instruction identique à l'instruction remplacée par celle exécutée des instructions causant une interruption, restitue l'instruction remplacée en écrivant la dite instruction localisée à la place de l'instruction causant l'interruption exécutée dans la dite copie de programme modifiée, exécute (80) l'instruction restituée et stocke une indication dans la mémoire selon laquelle l'instruction remplacée a été restituée ; et
des moyens de rapport qui établissent (76) un rapport sur celles des instructions du sous-ensemble sélectionné d'instructions qui ont été restituées et exécutées en lisant une indication stockée de celles-ci à partir de la mémoire.

10. Le système de la revendication 9, dans lequel l'instruction causant une interruption est une instruction de point d'arrêt.

11. Le système de la revendication 9, dans lequel l'instruction causant une interruption est une instruction non valable.
